# EUROPEAN PATENT APPLICATION

(11) **EP 1 048 210 A1**
(43) Date of publication of application: **02.11.2000**
(21) Application number: 99250141.1
(22) Date of filing: 29.04.1999
(51) Int. Cl.: A01K 23/00

(54) **Environment friendly animal toilet**

(71) Applicant: Chiu, Chui-Wen, Toronto, Ontario M3A2H8 (CA)
(72) Inventor: Chiu, Chui-Wen, Toronto, Ontario M3A2H8 (CA)
(74) Representative: von Füner, Alexander, Prof.h.c. Dr.

(57) **Abstract**

An environment friendly animal toilet that is worn by the animal and that can collect the animal's dung.

## Description

For generations, the dogs bring to people a lot of appreciated functions and happiness such as watching the door against burglars, rescuing the owner's danger and guiding the blind people to cross the street. Till today's industrial society, the dogs are those lonely people's best friends and they reduce family conflicts between the busy working parents and their children. As a result, nowadays, dogs live with their owners as one of the family member in our society, in addition, regarding the pets' inventive inoculation, the pet-owners or the whole society put a lot of efforts in preventive medicine to work out important problems. However, till recently, even thought we do a lot of researches to make the best plans for dog's nutritious food and we explore the best system for inventive inoculation. There is one issue left for long time without the bureau of sanitation's attention; that is the dogs' sanitary facilities, because of this lacking, a lot of dog-owned families spend a lot of money painfully on their dogs and it decreases theses families' life quality and environmental sanitation. Human begins invent flush toilet to solve our own body's excreta, but they forgot to help their "other kind" of members to invent the same equipment in order to solve these dogs' basic body needs. This is a big and serious shame for this high-standard society who improve human's ecology, but ignore animals whose problem is the same.

The people who love horse like clean the horses' extra in a short time hope to maintain the horse barn in clean condition and breath fresh air. They try to do the clean jobs as a daily routine to keep their horse away steps around on the manure and the hard remove stinky small. The horse owner has paid high cost and labor to maintain it. They may overuse the water wash the barns that cause negative impact on environment. This invention not only can solve this problem in reasonable way, but also can improve the environment quality bring the happiness to the people who love horses.

How to improve milk cow stay in healthy environment condition to reduce using clean drug and high medicine demand for the antibiotic, the invention can make it come true that change the "cow barn" into cow house" just as clean as like human house. At same time, it can collect a lot of high quality nature fertilizes, but reduce the environment pollution and stress. As a result, it will provide us for a best quality of milk and the cost is so little as two shopping bag daily. Moreover, the cow's extra can be collected and cleaned at one place completely that solve threatens and troubles of the society environment pollution from the animal farming business.

My invention point out this problem solving with tremendous of ideas created and planning in order to solve this issue. Here are my examples and explanations above:

### Reason 1:

a. For example, we take a walk in the public park and step on a dunghill; it must not be a pleasant experience, or when we pass by the grass or sit down on any bench in the park by noticing dung around us, this is another unpleasant evidence. Fortunately, the majority of dogs-owners are aware of picking up their dogs' dung in order to keep the environmental sanitation, however, the feeling to bend down and pick up their dogs' excreta is alike picking up a person's dung regardless the different opponents. As a consequence, we become our lovely dogs' long-term servants! We feel awkward and embarrassed by doing this disrespectful service. Inconspicuously, we develop resistance and confusion in our mind, somehow, we already built up a strong relationship with our dogs, by doing so for years especially for an elder, this is certainly bad for their blood pressure and there's such a big necessity to solve this problem immediately.
b. For the majority of dogs-owners, they can not sleep late because of these mental pressures to arrange their dog's defecation. So do those retired people. Anyhow, they must wake up on time including the weekend and holidays to put away their fatigue, just to serve their adorable dogs. They worry that if their dog defecate inside the house, this would increase the difficulty of cleaning and it influences the air in the house, or if these dogs defecate in their house, would be another difficult task for cleaning. By watering the shit would result a tremendous wet place; in addition, the bad smell flows into the septic tank as a result this increases the pollution for people who live in the apartment and are restricted by the space. Therefore, lots of dog-owners must clean the dog's dung and remind themselves for several times to remember the first thing to do in the next morning would be cleaning up the dogs' dung. If this phenomena occurs to an elder, it would be a burden, because of long period of not feeling free from the anxiety and worry, they can not sleep comfortably, as a result, a lot of medical problems come into place the next. This must be resolved right away.
c. Suspicious dog-owners: Taking dogs for a walk in the park is one of the happiest moments for those dog-owners. However, they become suspicious for other people who take a walk in the park. For example, the dog-owner is suspected for previous dunghill if he or she is the one who did not clean it up. No one saw the previous dog-owner that did not pick up the dung; therefore, nobody will blame the previous dog-owner but the current he or she. By saying "hello" or smiling to other people in the park become an unpleasant experience, since he or she may be the one who is being suspicious for all the dunghills left in different places and timing on the grass. The dog-owners must squeeze their heart tightly and hope to show on their face that they are the innocent dog-owners. They are not the ones who do not take responsibility for their dogs' dung, this results a very unhealthy pressure from the bottom of their heart for a lot of dog-owners. This long-term of unconsciousness of squeezing heart would be warned by the doctors who specialize in heart-treatment to be avoided as much as possible.
d. The reason for the subconscious of the mentality to violate a regulation and to regret as resulted in long-period of time: some dog-owners push their dogs off the car earlier and bring them to the park while they get off their car slowly and take a slow walk. However, their dog run around to excrete, the dog-owners know that their lovely dogs have already finished their excreting. All they have to do is to bring their dogs home. Even though it causes environment pollution and it causes other people trouble. However, this habit continues day after day, years after years, might end up a shameful conflict with their conscious. Day after day, it causes unhealthy thought such as anxiousness and depression for some of those unhealthy people. This shows on their face as if "they steal an small object in an department store every day", unconsciously, this bad habit becomes part of these people's character.
e. Labor service is a very expensive service in our society today. The manufacturers help us to save time-consuming activity such as offering us meatpacking in the supermarket and electrical equipment. Take a look at long-life dog, do we ask the time human beings spend tremendously on cleaning up their dogs' if another labor service. Sometimes, the dogs may change their defecated time slot or the owners may very their schedule for taking dogs out for a walk. Therefore on the street, we see those dogs-owners hold their dog in one hand and the plastic bag in the other hand, because of theses time-changes, the owner may forget to bring toilet paper and plastic bag. After excreting, they can only stand there and become perplex of what to do next. Therefore cleaning-up dung is a worthless labor service. In our today's society, a lot of dogs' owners pays tremendous of time for their pets with affections and become their slaves. This is an oppressed attitude.

The examples above from letter a, b, c, d and e are well explained the circumstance to the most of the dog-owners today. My idea is to help the unseen, untouched problem in our environment. I hope I can give a complete resolution to help solving this problem.

### The Advantages of This Invention

**a.** From now on, we can surely solve the dog-owners' labor service for their dog and reduce to the minimum the obstacle of their regular sleeping schedule.
**b.** We help our dogs to improve their life-quality just the way we help our living-quality by using flush toilet in addition, it improves the ecological environment.
**c.** The dog-owners use different unofficial tools and materials to weep off their dogs' dung. My invention helps simplifying all of these unnecessary steps and solves this totally.
**d.** The most important consequence is brought to the happiness of these old dog-owners and put them in the position of resting at ease. They can reduce tremendously their causes of high pressure and anxiety. All of these help the whole society to reduce the high expense in resources-use and it is a benefit for those people to change their bad habits caused of dogs.
**e.** My design can put on dogs' body in advance without throwing the lust bag right away; as a result, it helps to reduce all of the problems in my reason above. Even taking our dog to visit friends or traveling are convenient and nice-looking.
**f.** From now on, we will not meet frequently the dog-owners holding their dog in one hand and the plastic bags in the other in order to waste their time in waiting for their dogs' defection. This brings happiness to these dog-owners.
**g.** In addition the benefits of this invention, it can solve the conflicts, arguments, stresses, and water pollution of the sub city that around animal farming business.
**h.** The invention can make it true that change the "milk cow barm" into "milk cow house"
**i.** Since discovering the problem, researching, designing to resolving, my invention helps the leftover issue in this high-standard living society. Personally, by considering the importance of knowledge, I want to support these studious students to continue their study, especially those ones who come from very poor families but who respect their parents and their family members. I want to use my 30% of invention's net income and contribute so that those poor students can continue their further study.

### My Invention's Picture-Explanation

**My invention has three forms:** (1) FRAME-WORK FORM, (2) BELLY BEITED FORM, (3) BELLY SACK FORM
(1) The description of the FRAME-WORK style below is composed of picture A, B and C. Picture A contains the front illustration, section illustration, and side illustration. They all help to illustrate the equipment of a FRAME-WORK that helps to hang on the dogs' back and connect to the root of the anus. This production can be used till it's ruined. From picture A, the design helps the excretory garbage bag which hangs near the anus aiming at anus circle, after defeating, the circle part will help to collect the dung and throw it to the paper-bag. Step a1 to a11 illustrate the usage of using this hanging object.

**a1.** Both right and left sides have one pushing button, which serves to press a2.
**a2.** a2 is two angled and seesaw steel plate. As the picture shown above, a2 was pressed by a1. It follows to the rod circle a3 and flows down to a5 as rod supports to turn the supporting point, so that the other side of see saw steel plate will move up in an opposite direction to a6 which is a round clicking key to do the contracting action.
**a3.** The solid bar helps the spring a4 and a2 angled steel plates to go around the main axis up and down.
**a4.** This spring helps a1, a2 and a6 to go back to their normal state.
**a5.** The seesaw steel plate a2 helps to turn around the center and make both sides of a2 go opposite direction for functioning.
**a6.** The round contracting key stops and backs out from the entrance to withdraw the excretory garbage bag.
**a7.** The round-spot-link
**a8.** Two convex plates from up and down directions fix the convex to aim at the entrance. b2 pushes in and stop at a6.
**a9.** It helps to fix and to connect two abdominal elastic belts (c3) and to hang around the dogs' waist.
**a10.** Moreover, it fixes and connects to another back elastic belt for the usage of circling the dogs' anus root c2.
**a11.** The plated-plates or gold plates are made for the whole bases (the green-coloring part). Frontal, tangent surface and profile for the usage of paper-bag illustrate the picture B.
   The bag's function is to collect the dogs' dunghill and it is not recyclable.
**b1.** Made of paper pulp or any other materials, or the usage of cardboard or hardware for the paper-bag which benefit the flowing of dung into the hard paper-bag.
**b2.** The hollow, which matches a8, pushes and aims at for the convenience of knocking b5 from a6.
**b3.** Paper-bag or thin plastic bag.
**b4.** Polished paint to increase polishes.
**b5.** The hollow grounds provide a6 key hooks to insert and to squeeze in between, besides, it helps to adjust the length by itself.

### C. 2 Transparents

Object equipment description: usage of the paper-bag, which fixes on dog' body.
**c1.** Flexible elastic outfit to adjust the distance between dog's rot and anus.
**c2.** The back elastic band serves to circle the dog's back in order to fix the frame on dogs' waist
**c3.** 2 lower-private elastic belts to hang on dogs' belts in order of fix the frame.

The transparent illustration of utility equipment

### Belly Belted Form

The theory if using a soft wide belt wear from the dog's low belly and along the distance between the waist and anus to attach a urine bag to collect the dog's extra, also it has a urine packet design for the male dog, and shit's collect bag that glue on the belt. The whole betted shape like work "T" (Re. Illustration G)

About the g7 and g8, it has two belts, one from the left and one from the right side of the dog's belly, and then two belts connect from dog's belly to dog's back and tie as like a wrist belt

About g9, it has a long narrow lip hole to fit into the dog tail's root, and stick it with g2, and then make the belt along the dog's back forward in order to tie with the g7 and g8 into a word "T" form. Before using it, it requires an extra equipment (RE. Illustration F) to keep a open flow space from anus to the shit bag. It is made by hard paper that can using the one bottom of the F1 pipe like illustration direction insert into the shit bag (g3) to extend the entry space.

Using the Belly Betted Form, the mark details of instruction of the illustration G are as follow:
**g1**: it is a half around sink and it has a round hole to connect to the shit bag.
**g2**: mild hard plastic rounds circles that glue attaches on the belt to make the belt fit in the dog's tail and steady.
**g3:** the shit bag to connect to g1.
**g4:** the urine sink for the male dog contains the urine pipe to connect to the g6
**g5**: the half part of down side of the urine pipe has a small holes and insert into the urine bag.
**g6**: The urine bag
**g7, g8, g9, g11**; Velcro plate design for easy connect the belts and easy to untie it.
**g10:** elastic belt: Attach equipment description, in the illustration F: it has the design to keep and extend the flow space from the anus to the shit bag.
**f1**: round shape pipe
**f2**: to keep the dog's tail contact with the anus distance.

### Belly Sack Form

The major part of design is similar with the Belly Belted Form, the different is Belly Sack Form requires to change the excretory garbage bag each time. The other part can livelong continual to use. It adopts the button method (h6) to hook the entry of the hard shell bag into the insert and make the bag entry contact the anus and the penis; in addition, the excretory garbage bag can carry the object weight from outside like the kangaroo's belly pocket connection. (Re. Illustration H)
**h1:** hard entry of the dung bag
**h2:** h7 Same as Belly Belted Form
**h3:** h5: Similar kangaroo's belly pocket
**h6:** button's hooker
**h4:** Hard entry of the urine bag

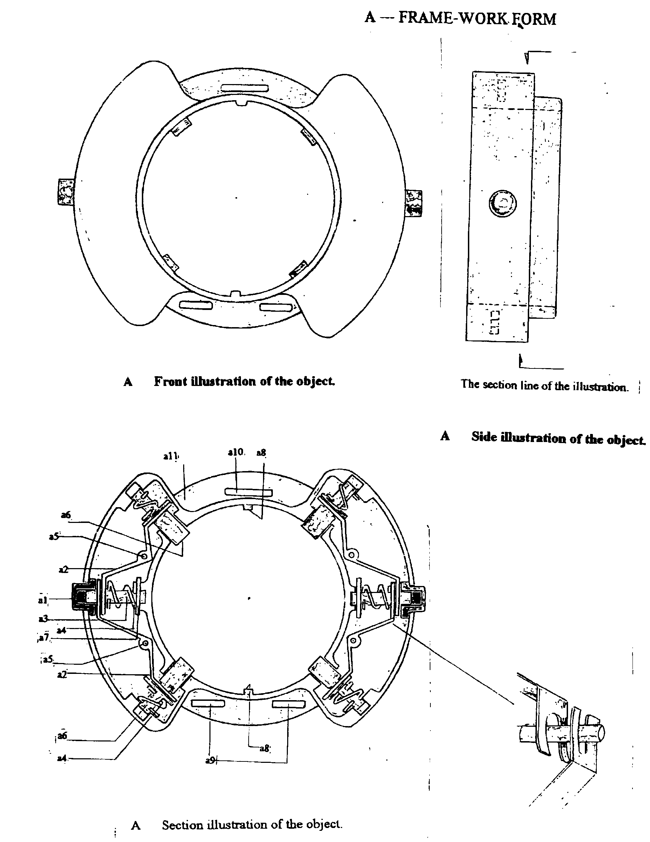

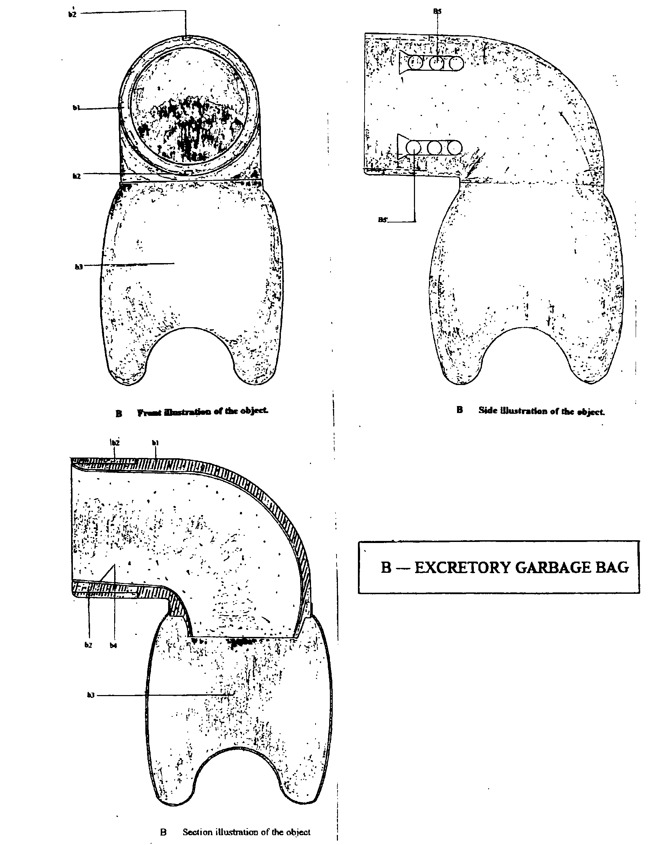

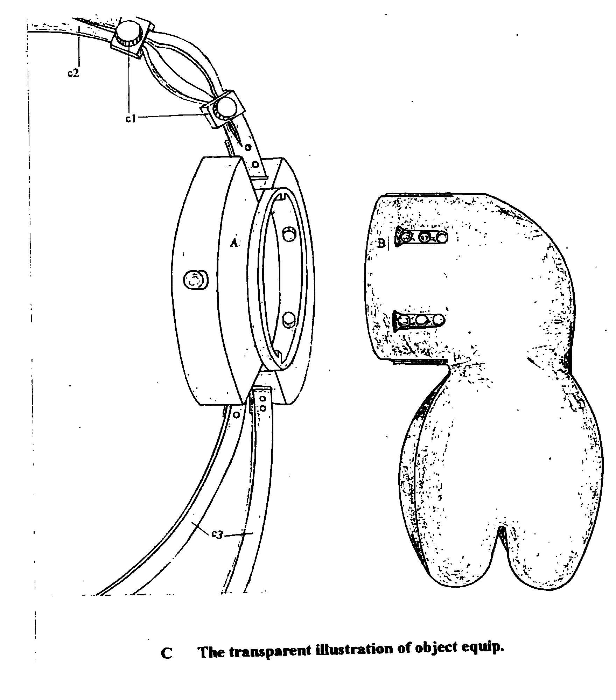

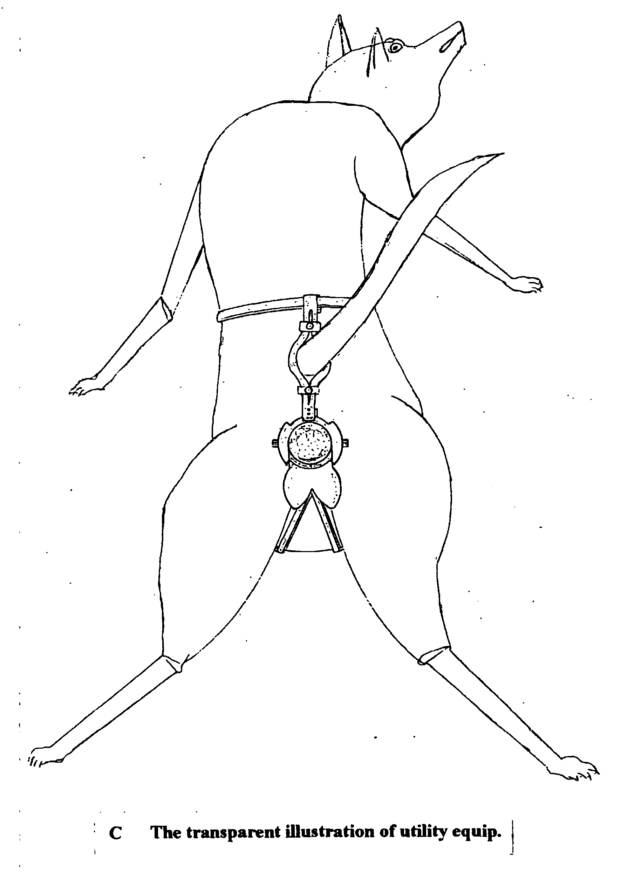

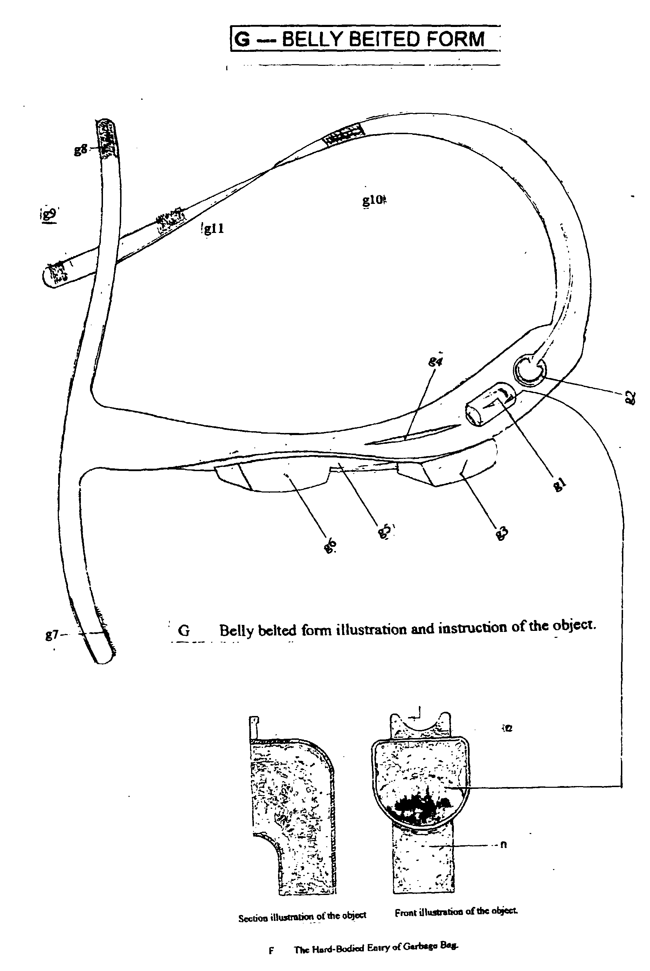

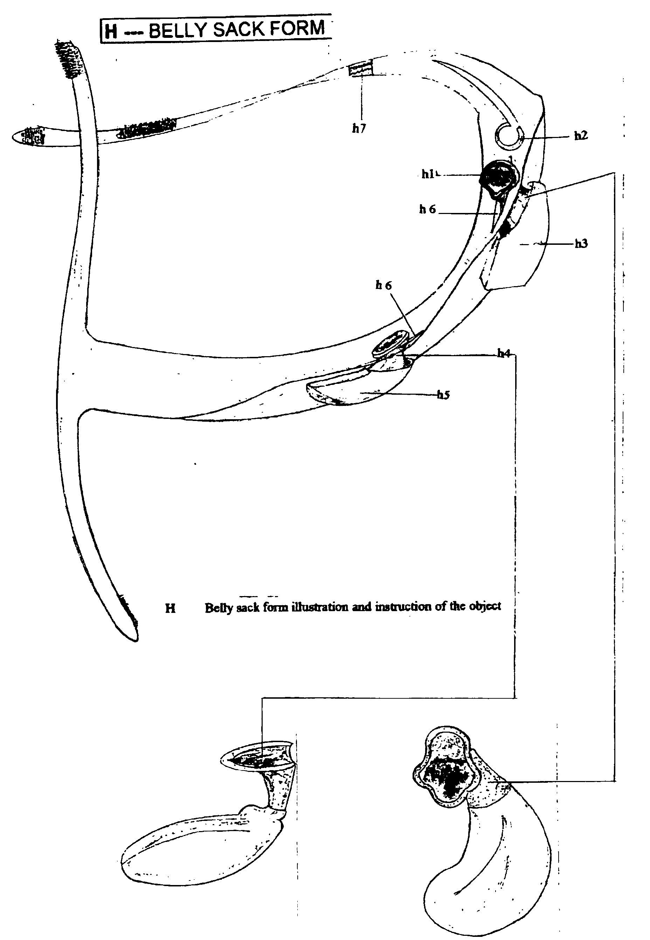

## Claims

1. Like the proposal above, I gave out the picture explanation and all of my created ideas. This equipment helps animals to use it anywhere and anytime. It is equipment that can collect the animals' dung.

2. Materials such as the paper, the plastic, the acrylic resin, the plastic clothe. Numerous cloths and several nets, fur rubbers, metals and the others.

3. The animals allowed to use this equipment are dogs, horses, cows and any other suitable animals.

4. The animals' function: including pets, the breeding, investigation and research purposes.

5. My descriptive pictures shown A, B, the clipping banging components and the paper bag's fixing or screw fixing, single-side plate, basket-style fixing, crossing scissors fixing and the others.

6. Belly Betted Form and Belly Sack Form such as the rope and the net that fixes the excretory garbage. Including enlarge belt entry hole (picture h6) that helps animals to defecate from anus at external of belly belt by using Velcro excretory bag sticking around the belly skin.

7. Hanging style Belly Belted Form and Belly Sack Form's style of what humans use the triangle panties.
